Europäisches Patentamt

European Patent Office

Office européen des brevets

(11) Veröffentlichungsnummer: **0 508 306 A1**

## EUROPÄISCHE PATENTANMELDUNG

(21) Anmeldenummer: **92105676.8**

(22) Anmeldetag: **02.04.92**

(51) Int. Cl.⁵: **C23C 28/00**, C23C 22/78,
C23C 22/24

(30) Priorität: **10.04.91 DE 4111701**

(43) Veröffentlichungstag der Anmeldung:
**14.10.92 Patentblatt 92/42**

(84) Benannte Vertragsstaaten:
**AT BE CH DE DK ES FR GB IT LI NL SE**

(71) Anmelder: **ITW BEFESTIGUNGSSYSTEME
GmbH
Liegnitzer Strasse 1
W-5860 Iserlohn 7 (Letmathel)(DE)**
(84) **BE CH DE ES FR LI NL AT**

(71) Anmelder: **EIBACH OBERFLÄCHENTECHNIK
GmbH
Therecker Weg 8
W-5950 Finnentrop(DE)**
(84) **DK GB IT SE**

(71) Anmelder: **Reinecke, Rudolf
Nottebohmstrasse 4
W-5880 Lüdenscheid(DE)**
(84) **DK GB IT SE**

(72) Erfinder: **Isenberg, Rainer
Schattweg 16
W-5860 Iserlohn Letmathe(DE)**
Erfinder: **Hoffmann, Wolfgang
Goethestrasse 28
W-5860 Iserlohn(DE)**
Erfinder: **Reinecke, Rudolf
Nottebohmstrasse 4
W-5880 Lüdenscheid(DE)**
Erfinder: **Herr, Hans Werner
Hessmecke 15
W-5980 Werdohl(DE)**

(74) Vertreter: **Dipl.-Ing. H. Hauck, Dipl.-Ing. E.
Graalfs, Dipl.-Ing. W. Wehnert, Dr.-Ing. W.
Döring
Neuer Wall 41
W-2000 Hamburg 36(DE)**

(54) **Verfahren zur Korrosionsschiutzbeschichtung von Werkstücken aus Stahl.**

(57) Verfahren zur Korrosionsschutzbeschichtung von Werkstücken aus Stahl, bei dem eine chemo-mechanische Schicht auf die Werkstückoberfläche aufgebracht und die chemo-mechanische Schicht chromatiert wird, dadurch gekennzeichnet, daß die chromatierte Schicht mit einer weiteren Schicht mit metallischen Bestandteilen und organischen Bindemitteln versehen und die weitere Schicht durch Wärmebehandlung ausgehärtet wird.

Gegenstand der Erfindung ist ein Verfahren zur Korrosionsschutzbeschichtung und Vermeidung der Wasserstoffversprödung von Werkstücken aus Stahl, bei dem eine chemo-mechanische Schicht auf die Werkstückoberfläche aufgebracht und die chemo-mechanische Schicht chromatiert wird. Das Verfahren ist auf Werkstücke aller Art anwendbar, insbesondere mit einer aber auch ohne eine härtetechnische Behandlung.

Bei einem Verfahren der eingangs genannten Art umfaßt das Aufbringen der chemo-mechanischen Schicht vorzugsweise das Entfetten bzw. Reinigen der Werkstückoberfläche, Unterkupfern der gereinigten Oberfläche, Aufbringen eines Promotors, auf die Kupferschicht sowie anschließendes Verzinken. Statt Zink können auch artverwandte Metalle wie Zinn, Aluminium bzw. Cadmium aufgebracht werden. Derartige chemo-mechanische Beschichtungsverfahren sind aus der Veröffentlichung "Mechanical Plating - Die Entwicklung des Verfahrens" von U. Meyer in "Galvanotechnik", Eugen G. Lenze Verlag, Heft Nummer 9, Band 73 (1982) bekannt. Das anschließende Chromatieren kann in herkömmlicher Weise insbesondere elektrolytisch erfolgen. Die Korrosionsbeständigkeit, insbesondere die Sicherheit gegenüber sogenannter "Unterrostung" derart korrosionsschutzbeschichteter Werkstoffe ist noch verbesserungsbedürftig.

Davon ausgehend liegt der Erfindung die Aufgabe zugrunde, ein Verfahren der eingangs genannten Art zu schaffen, das insbesondere die Korrosionsbeständigkeit der behandelten Werkstücke erhöht und ein Wasserstoffversprödung vermeidet.

Zu dieser Aufgabe sieht eine erste Lösungsalternative vor, daß die chromatierte Schicht mit einer weiteren Schicht mit metallischen Bestandteilen und organischen Bindemitteln versehen und die weitere Schicht durch Wärmebehandlung ausgehärtet wird. Die erfindungsgemäß aufgebrachte weitere Schicht kann als metallische Bestandteile sogenannte Opfermetalle wie Zink und gegebenenfalls Aluminium enthalten und als organisches Bindemittel ein Harz mit einem Lösungsmittel. Durch die Wärmebehandlung verflüchtigt sich das Lösungsmittel und vernetzen die Harzanteile, wobei sie die weitere Schicht auf der chromatierten Schicht fixieren. Hierdurch entsteht eine anorganische Außenschicht mit im wesentlichen metallischen Bestandteilen. Ein erfindungsgemäß korrosionsschutzbeschichtetes Werkstück zeigt gegenüber einem herkömmlicherweise beschichteten z.B. im Salzsprüh- oder Kesternich-Test eine erheblich verbesserte Korrosionsbeständigkeit. Dabei ist das Verfahren einfach auszuführen und in der Massenproduktion wirtschaftlich einsetzbar.

Gemäß einer zweiten Lösungsalternativen wird auf die chromatierte Schicht eine organische Deckschicht aufgebracht. In Verbindung mit der ersten Lösungsalternativen kann die organische Deckschicht aber auch auf die ausgehärtete weitere Schicht aufgebracht werden.

Die organische Deckschicht enthält vor dem Auftragen vorzugsweise ein Lösungsmittel sowie ein organisches Bindemittel, insbesondere ein Harz, welches sich auf dem Werkstück unter Freisetzung des Lösungsmittels verfestigt. Die einfach aufzubringende organische Deckschicht verleiht dem verfahrensgemäß beschichteten Werkstück ebenfalls eine verbesserte Korrosionsbeständigkeit, wenngleich eine Beschichtung gemäß erster Lösungsalternative insbesondere in obigen Testverfahren deutlich bessere Ergebnisse erreicht. Ferner vermindert die organische Deckschicht aufgrund ihrer geringen elektrischen Leitfähigkeit die Neigung des Werkstückes zur Kontaktkorrosion in Berührung mit einem Werkstück aus einem anderen Metall. Deshalb kann die besonders vorteilhafte Kombination mit der ausgehärteten weiteren Schicht vorgesehen sein, welche im übrigen einen weiter verbesserten Korrosionsschutzeffekt hat.

Gemäß einer bevorzugten Ausgestaltung enthalten die organische Deckschicht und/oder die chemo-mechanische Schicht ein Gleitmittel, vorzugsweise PTFE-Partikel. Durch Dosieren des Gleitmittels in der organischen Deckschicht ist die Gleitwirkung der Werkstückoberfläche in einem weiten Bereich einstellbar. Dies kann besonders vorteilhaft bei Kombination der Deckschicht mit der weiteren Schicht genutzt werden, die zwar eine gute, jedoch nur geringfügig beeinflußbare Gleitwirkung aufweist. Ein Gleitmittel in der chemo-mechanischen Schicht kann dem Werkstück Notschmiereigenschaften für den Fall der Verletzung der äußeren Schichten verleihen. Diese Eigenschaft kann bei erheblich beanspruchten Werkstückoberflächen gefragt sein. Gleitmittelzusätze sind insbesondere bei Beschichtungen von Verbindungselementen mit Gewinde von hoher Bedeutung.

Bevorzugt wird zum Chromatieren ein Gelbchromat verwendet, welches eine gute Haftgrundlage für eine aufgebrachte Schicht insbesondere mit organischen Bindemitteln bildet.

Eine besonders gute Haftung ergibt sich, wenn die chromatierte Schicht hauchdünn aber wischfest aufgebracht ist. Sie hat dann irisierendes Aussehen, wobei ein Gelbchromat eine leicht gelbliche Färbung bewirkt. Durch das wischfeste Aufbringen sollen Beschädigungen der chromatierten Schicht bei der weiteren Bearbeitung des Werkstückes vermieden werden. Mit dieser Beschaffenheit kann die chromatierte Schicht vor allem durch Anwenden einer Chromatverbindung in einer wäßrigen Suspension erzeugt werden. Durch elektrolytisches Chromatieren wird in der Regel eine bräunliche Chromatschicht erzeugt, welche nicht die gewünschte Beschaffenheit aufweist.

Gemäß einer weiteren Ausgestaltung kann auf die chromatierte Schicht ein Haftvermittler auf Basis wasserlöslicher organischer Harze aufgebracht werden, bevor sie mit der weiteren Schicht versehen wird.

Ferner dürfte die chemo-mechanische Schicht mit ihrer porösen Struktur für die Haftung der auf die chromatierte Schicht aufgebrachten Schicht von Bedeutung sein.

Nach einer bevorzugten Weiterbildung enthält die weitere Schicht vorzugsweise zu etwa 85 % Zink und vorzugsweise zu etwa 2 bis 3 % Aluminium oder artverwandte Metalle. Ferner kann die weitere Schicht zu vorzugsweise etwa 10 bis 15 % Lösungsmittel sowie Bindemittel enthalten. Diese Zusammensetzungsangaben beziehen sich auf den Zustand der weiteren Schicht vor der Wärmebehandlung. Somit wird ein hochreaktives zinkhaltiges System verwendet, welches aufgrund der Metallanteile und des Bindemittels nach der Wärmebehandlung einen diffusionsfesten Film mit kathodischer Schutzwirkung als weitere Schicht bildet. Die Zinkanteile mit feiner Plättchenstruktur überlagern sich darin wie Dachschindeln, wobei die weitere Schicht sehr gleichmäßig strukturiert ist.

Gemäß einer bevorzugten Weiterbildung wird die weitere Schicht bei etwa 200 °C für ungefähr 15 bis 20 Minuten ausgehärtet. Schließlich sieht eine Ausgestaltung des Verfahrens vor, daß die organische Deckschicht ein organisches Bindemittel, vorzugsweise etwa 45 bis 50 % Lösungsmittel und gegebenenfalls Farbpigmente enthält.

Das Verfahren kann vorteilhaft auch für Verbindungsmittel, wie Schrauben oder dergleichen, angewendet werden.

Bei einer bevorzugten Korrosionsschutzbeschichtung hat das Werkstück eine unterkupferte chemo-mechanische Schicht aus Zink, sowie eine darauf dünn und wischfest durch Anwenden einer wäßrigen Suspension aufgebrachte sowie getrocknete chromatierte Schicht. Die chromatierte Schicht trägt einen Haftvermittler auf Basis wasserlöslicher organischer Harze, der wiederum mit einer ausgehärteten weiteren Schicht bedeckt ist. Die weitere Schicht besteht vor dem Aushärten im wesentlichen aus etwa 85 % Zink, 2 bis 3 % Aluminium, 5 % Bindemittel und im übrigen aus Lösungsmittel. Ein Mittel entsprechender Zusammensetzung ist im Handel (von der Firma Dörken) unter der Bezeichnung "Deltatone" erhältlich. Die weitere Schicht wird bei etwa 200 °C für ca. 15 bis 20 Minuten ausgehärtet. Die weitere Schicht kann auch in mehreren, einander überdeckenden Teilschichten aufgetragen werden. Darauf kann sich noch eine organische Deckschicht aus einem Gemisch von 45 bis 50 % Lösungsmittel und organischem Bindemittel befinden, die gegebenenfalls ein PTFE-Gleitmittel enthält. Ein entsprechendes Mittel ist im Handel (von obigem Lieferanten) unter der Bezeichnung "Deltaseal" erhältlich.

**Patentansprüche**

1. Verfahren zur Korrosionsschutzbeschichtung von Werkstücken aus Stahl, bei dem eine chemo-mechanische Schicht auf die Werkstückoberfläche aufgebracht und die chemo-mechanische Schicht chromatiert wird, dadurch gekennzeichnet, daß die chromatierte Schicht mit einer weiteren Schicht mit metallischen Bestandteilen und organischen Bindemitteln versehen und die weitere Schicht durch Wärmebehandlung ausgehärtet wird.

2. Verfahren nach dem Oberbegriff des Anspruches 1, insbesondere in Verbindung mit dessen Kennzeichen, dadurch gekennzeichnet, daß auf die chromatierte Schicht oder die ausgehärtete weitere Schicht eine organische Deckschicht aufgebracht wird.

3. Verfahren nach Anspruch 1 oder 2, dadurch gekennzeichnet, daß die organische Deckschicht und/oder die chemo-mechanische Schicht ein Gleitmittel, vorzugsweise PTFE-Partikel, enthalten.

4. Verfahren nach einem der Ansprüche 1 bis 3, dadurch gekennzeichnet, daß die chromatierte Schicht ein Gelbchromat enthält.

5. Verfahren nach einem der Ansprüche 1 bis 4, dadurch gekennzeichnet, daß die chromatierte Schicht hauchdünn aber wischfest aufgebracht ist.

6. Verfahren nach einem der Ansprüche 1 bis 5, dadurch gekennzeichnet, daß durch Anwenden einer Chromatverbindung in einer wäßrigen Suspension chromatisiert wird.

7. Verfahren nach einem der Ansprüche 1 bis 6, dadurch gekennzeichnet, daß auf die chromatierte Schicht ein Haftvermittler auf Basis wasserlöslicher organischer Harze aufgebracht wird, bevor sie mit der weiteren Schicht und/oder der organischen Deckschicht versehen wird.

8. Verfahren nach einem der Ansprüche 1 bis 7, dadurch gekennzeichnet, daß die weitere Schicht vorzugsweise etwa 85 % Zink und vorzugsweise ca. 2 bis 3 % Aluminium oder artverwandte Metalle enthält.

9. Verfahren nach einem der Ansprüche 1 bis 8, dadurch gekennzeichnet, daß die weitere Schicht vorzugsweise etwa 10 % Lösungsmittel und vorzugsweise etwa 5 % Bindemittel enthält.

10. Verfahren nach einem der Ansprüche 1 bis 9, dadurch gekennzeichnet, daß die weitere Schicht bei etwa 200 °C ungefähr 15 bis 20 Minuten ausgehärtet wird.

11. Verfahren nach einem der Ansprüche 1 bis 10, dadurch gekennzeichnet, daß die organische Deckschicht ein organisches Bindemittel, vorzugsweise etwa 45 bis 50 % Lösungsmittel und gegebenenfalls Farbpigmente enthält.

12. Verfahren nach einem der Ansprüche 1 bis 11, gekennzeichnet durch seine Anwendung auf Verbindungsmittel, wie Schrauben oder dergleichen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | FR-A-2 370 108 (THE EMPIRE PLATING COMPANY)<br><br>* Seite 9, Absatz 3; Ansprüche 1,7-12 * | 2,4, 10-12 | C23C28/00<br>C23C22/78<br>C23C22/24 |
| Y | * Ansprüche 1,7-12 *<br>--- | 1,3,6,8 | |
| Y | PATENT ABSTRACTS OF JAPAN<br>vol. 12, no. 297 (C-519)(3144) 12. August 1988<br>& JP-A-63 065 087 ( KAWASAKI STEEL CORP. ) 23. März 1988<br>* Seite 6 *<br>* Zusammenfassung *<br>--- | 1,3,8 | |
| Y | PATENT ABSTRACTS OF JAPAN<br>vol. 10, no. 120 (C-343)6. Mai 1986<br>& JP-A-60 245 784 ( NIHON DAKURO SHIYAMUROTSUKU K.K. ) 5. Dezember 1985<br>* Zusammenfassung *<br>--- | 6 | |
| A | PATENT ABSTRACTS OF JAPAN<br>vol. 13, no. 472 (C-647)25. Oktober 1989<br>& JP-A-1 184 298 ( NIPPON STEEL CORP. ) 21. Juli 1989<br>* Zusammenfassung *<br>--- | 3 | **RECHERCHIERTE SACHGEBIETE (Int. Cl.5 )** |
| A | FR-A-2 307 886 (SEPROM-THERMONITE)<br><br>----- | | C23C |

Der vorliegende Recherchenbericht wurde für alle Patentansprüche erstellt

| Recherchenort | Abschlußdatum der Recherche | Prüfer |
|---|---|---|
| DEN HAAG | 28 JULI 1992 | TORFS F.M. |